# EUROPEAN PATENT SPECIFICATION

(11) **EP 4 461 490 B1**
(45) Date of publication and mention of the grant of the patent: **08.07.2026**
(21) Application number: 24175146.0
(22) Date of filing: 10.05.2024
(51) Int. Cl.: B27M 1/08, B23Q 1/48, B23Q 1/62, B23Q 3/157, B23Q 1/54

(54) **MACHINE FOR WORKING WOODEN ELONGATED WORKPIECES AND METHOD FOR THE OPERATION THEREOF**
VORRICHTUNG ZUR BEARBEITUNG LÄNGLICHER WERKSTÜCKE AUS HOLZ UND ZUGEHÖRIGES VERFAHREN ZU DEM BETRIEB
DISPOSITIF D'USINAGE DE PIÈCES EN BOIS ALLONGÉES ET SON PROCÉDÉ D'EXPLOITATION

(30) Priority: 12.05.2023 IT 202300009606
(43) Date of publication of application: 13.11.2024
(73) Proprietor: SCM Group S.p.A., 47921 Rimini (RN) (IT)
(72) Inventor: GIGLIOTTI, Fabrizio, RIMINI 47921 (IT)
(74) Representative: Gallo, Gianluca

(56) References cited:
- EP-A1- 4 074 479
- JP-A- S59 146 723
- US-A1- 2015 290 755

## Description

This invention relates to a machine for machining elongated, wooden semiproducts such as boards, planks, crossbeams and the like, used in particular for structural elements (also known as "timber frames"), and to a method for machining elongated, wooden semiproducts with such a machine.

Machines for machining long, wooden semiproducts such as boards, planks, crossbeams and the like are usually provided with one or more machining units, a work support and a transporting device for moving and positioning the semiproducts.

In these machines, much more attention is placed on the precision of positioning the semiproduct than on machining flexibility and performance. An example of machines of this kind is disclosed in prior art document EP 2802441 (A1), in which the machining unit is movable along two, orthogonal linear axes and is rotatable about three axes of rotation so it can move on all sides of the semiproduct to be machined and can be rotated so that the machining tool can be oriented relative to each side.

That way, for example, it is possible to make grooves, holes or other recesses on the top and underside, on the front and rear sides and on the two end sides of the semiproduct without turning it over.

Machines of this kind are not very high-performing and need to be re-tooled each time a different process has to be carried out.

Also known in the prior art are machining centres in which a series of power-driven conveyors feed a machining cabin with one semiproduct at a time or an inseparable group of semiproducts, such as packs of boards, for example, and thus comprise means for picking up the finished semiproducts to convey them to a storage area.

In these machining cabins there are multi-tool assemblies adapted to be moved along three linear axes and three axes of rotation so that all six faces of the semiproducts can be machined without using overturning devices; an example is described in prior art document US 2018/0200914 (A1) in which a tool is supported by a motor spindle moved horizontally and vertically by a carrier. The tool may also rotate about the horizontal axis and, via an angled arm, also about the vertical axis. Another relevant prior art document is EP 4 074 479 A1 which discloses a machine comprising 5 axis tool head for processing wooden panels, a machining unit, and an in and out feeding unit.

There is also a third axis of rotation, perpendicular to the vertical axis and spaced from the first axis of rotation.

Machinery of this kind is, however, very complex and requires a very complicated movement system, which translates as higher costs of production and maintenance of the machining centre.

The purpose of this invention is to overcome the abovementioned drawbacks of prior art machines for machining wood to allow constructing machines that are simple in structure and suitable for multiple processes so as to constitute an effective commercial alternative to a wide range of more specific products.

In the context of the aforementioned purpose, this invention has for an aim to provide a machine for machining wood and which can provide high-level performance at competitive costs.

This purpose and this and other aims which become more apparent as this description continues are achieved by a machine according to the invention, for machining wood and comprising the technical features set out in one or more of the accompanying claims. The dependent claims correspond to possible different embodiments of the invention.

In particular, according to a first aspect, this invention regards a machine for machining elongated, wooden semiproducts such as boards, planks, crossbeams and the like, and which comprises a machining unit connected on one side to a feed unit and, on the other side, to an outfeed unit.

The machining unit comprises a machining assembly, preferably inside a machining cabin, which has a plurality of axes for roto-translating tools for machining the semiproducts or workpieces to be processed.

The feed unit, located upstream of the machine relative to the machining unit, is configured for moving each semiproduct to be machined, along a longitudinal feed direction towards the machining unit.

Advantageously, the longitudinal axis coincides with the direction of extension of the semiproduct feeding into the machining unit.

The outfeed unit is adapted to receive the finished semiproduct which it picks up from the machining unit.

The Applicant had the intuition of using a tool holder head of the revolver type, that is to say, adapted to mount the machining tools selectively by rotating about an axis of revolution. In practice, the machining assembly comprises a tool holder head which is driven in rotation about the axis of revolution and is configured to selectively set the machining tools of the plurality of tools as a function of its rotation about the axis of revolution. This feature gives the machine user extraordinary versatility of use, allowing any tool considered necessary to be loaded on the tool holder revolver head.

Moreover, the tool holder head is also pivotable about a pivoting axis transverse to the longitudinal direction and to the axis of revolution.

That way, with simple geometry and a limited number of machining axes, the Applicant has allowed each tool of the tool holder head to machine any face of the semiproduct.

In practice, excluding the working axis specific to each tool (in the case of percussion tools, there is no such axis), the tool holder head is able to work on all six faces of the workpiece by rotating about two axes of rotation: namely, the axis of revolution and the pivoting axis.

Advantageously, to make the machine even more economically competitive, a single motor is provided to drive all the tools, which means they all rotate while the workpiece is being machined by the selected tool. For rotation of the tool holder revolver head about the axis of revolution, the Applicant has provided an additional drive motor for rotary selection of the tool to be used each time.

Obviously, the tool holder assembly can advantageously be enhanced by other machining devices.

For this purpose, the above mentioned tool holder head is advantageously provided with an additional head, having at least one specific actuator of its own, for the additional machining of the semiproduct.

Preferably, this specific actuator has at least three axes of rotation for the additional tool which it supports.

The machining assembly comprises a transporting carrier which supports the tool holder head and allows it to move along a horizontal axis and along a vertical axis, respectively parallel and normal to the floor, by means of a movement slider which engages the mounting frame of the machining cabin.

In practice, the transporting carrier and the movement slider constitute, respectively, the horizontal arm and the vertical arm of a cross carriage of essentially known type, which the Applicant has used to make the machining assembly compact.

Preferably, the pivoting axis is substantially parallel to the floor. Furthermore, this axis is also preferably substantially normal to the longitudinal direction, that is, to the direction of extension of the workpiece to be machined.

Preferably, the tool holder head is rotated steplessly around the pivoting axis by means of a pivoting head mounted on the horizontal arm of the cross carriage and controlled by an electric motor so that, as it rotates, the tool holder head can occupy one of a set of positions included between two end positions to work with the tool.

Such end positions are preferably symmetrical to each other about the pivoting axis itself.

In other words, the pivoting head allows the tool to describe a trajectory as it rotates about the pivoting axis by an angle substantially included between 0° and 120° clockwise and anticlockwise, relative to the vertical axis (taken as the oscillation zero), endpoints included, preferably between 0° and 110°, endpoints included, more preferably between 0° and 100°, endpoints included, and still more preferably, between 0° and 90°, endpoints included. The Applicant perceived that to allow the tool holder head to be able to rotate about both the axis of revolution, so as to select the tool to be used, and the pivoting axis so as to be able to work all the faces of the portion of semiproduct facing the inside of the machining cabin, it is necessary for there to be a distance between the wall of the cabin compared to prior art machines.

This distance could lead to the workpiece bending while it is being machined, thus negatively impacting its quality.

For this reason, a retractile support was advantageously provided to support the portion of semiproduct inside the machining cabin. This retractile support is mounted on a first wall of the machining cabin at an inlet opening where the semiproduct enters the cabin and has a free end extending into the machining cabin itself.

Advantageously, to give the tool holder head ample freedom of movement while minimizing the size of the machining cabin as much as possible, the retractile support is adapted to be moved, preferably along the longitudinal direction X, between an initial position and a working position: at the initial position, the free end of the support is at its minimum distance from the wall, so as to be in the minimum size configuration; at the working position, the free end is at its maximum distance from the wall so as to support the largest possible part of the semiproduct.

Similarly, on the opposite side of the machining cabin, there is advantageously provided a second movable support at an access opening towards the outfeed unit.

To coordinate the rotation of the tool holder head about the pivoting axis with the movement of the semiproduct along the longitudinal direction, the Applicant has provided a specific control unit.

The control unit synergically also controls the movement of the tool holder head along the horizontal and vertical axes in conjunction with the rotation about the axis of revolution and the pivoting axis so as to bring the correct tool to the right point of the machining process.

Advantageously, the control unit is configured to capture machine data regarding the machining to be carried out on the semiproduct.

In practice, depending on the machining process chosen by the user, the control unit controls the rotation of the tool holder head about the pivoting axis coordinatedly with the rotation of the tool about its own working axis and the position of the semiproduct.

Moreover, the movement of the supports, namely the retractile support and/or the movable support, is also dependent on the control unit, which controls their translation according to the movement of the actuators of the machining assembly.

Another aspect of the invention regards a method for machining elongated, wooden semiproducts, such as boards, planks, crossbeams and the like, using a machine such as that just described.

This method comprises, first of all, transporting each semiproduct, workpiece or inseparable group of semiproducts to be machined in succession along a longitudinal feed direction from a loading unit to a machining unit.

In the machining unit, motion actuators are used to drive a machining assembly having a plurality of axes for the roto-translation of tools for machining the semiproducts.

The tool chosen for the machining process is set by selecting it by rotating a tool holder head about an axis of revolution.

The tool holder head is also rotated about a pivoting axis, transverse to both the longitudinal direction and the axis of revolution so as to be able to work all the faces of the semiproduct.

Once machining has been completed, the semiproduct is moved towards an outfeed unit.

Advantageously, the rotation of the tool holder head about the pivoting axis occurs at any position included between two end positions, preferably symmetrical to each other about the pivoting axis, so as to describe, for each rotation, a portion of a circular arc subtended by an angle substantially included between 0° and 120°, endpoints included, clockwise and anticlockwise, about the vertical axis taken as reference zero of the oscillation; the arc portion is preferably between 0° and 110°, endpoints included, more preferably between 0° and 100°, endpoints included, and still more preferably, between 0° and 90°, endpoints included.

For the semiproduct to be machined, it needs to enter a machining cabin which contains the machining assembly. Here, a retractile support is moved along the longitudinal direction between an initial position and a working position, where, at the initial position, the retractile support has a minimum size configuration and, at the working position, the retractile support has a configuration such as to support the largest possible part of the semiproduct.

Similarly, during machining, a second movable support for another portion of the semiproduct leaving the machining unit performs a retractile movement between an initial position, where the second support has a minimum size configuration, and a working position, where its configuration is such as to support the largest possible part of the semiproduct. Machining of the semiproduct by the chosen tool, mounted on the tool holder head, thus occurs by controlling the roto-translation of the tool holder head itself so as to coordinate it with the position of the semiproduct, which is thus suitably transported along the longitudinal direction.

The Applicant has envisaged the situation where the tool holder head is pivotable about the pivoting axis during the machining process.

In practice, the pivoting head causes the tool holder head to rotate about the pivoting axis even when the tool engages the workpiece being machined.

Advantageously, the coordination between the roto-translation of the tool holder head and the movement of the semiproduct is managed by a control unit which drives the different members of the machining assembly and positions the portion of semiproduct in the machining cabin according to the selected machining process, hence according to the data preset by the user. In addition to that, the control unit moves the retractile support and/or the movable support in cooperation with the driving of the actuators which move the machining assembly and the movement of the semiproduct.

Further features and advantages of the invention are more apparent from the description of a preferred but non-exclusive embodiment of the machine for machining wood, illustrated for exemplary, hence non limiting purposes in the accompanying drawings, in which:
Figure 1 is a perspective view of the machine 1 for machining wooden semiproducts P and shows in sequence a loading unit 100, a machining unit 200 and an outfeed unit 300;
Figure 2 is a perspective view showing the machining assembly in a detail of the interior of the machining cabin 2;
Figure 3 shows a perspective view of the interior of the machining cabin 2;

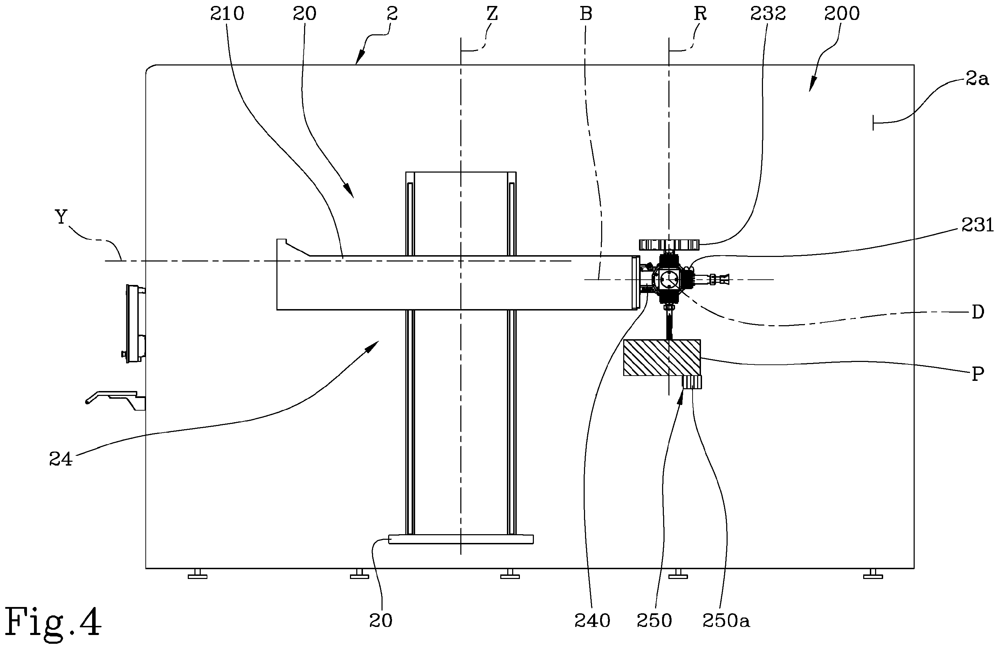

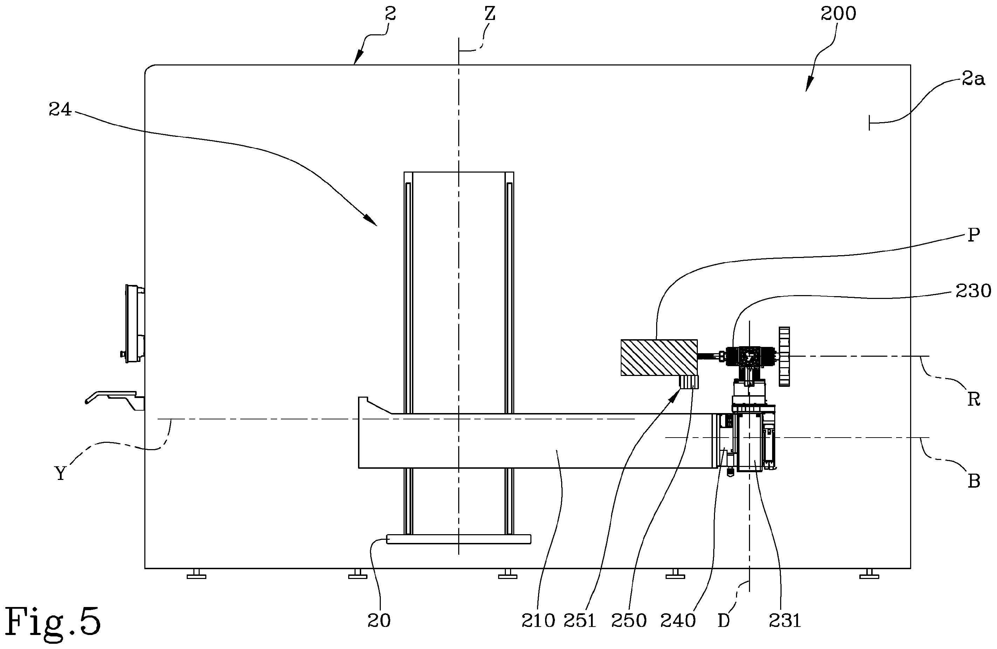

Figures 4 and 5 schematically represent two different working positions on the portion of the semiproduct P inside the cabin 2;
Figure 6 shows the machining zone 200 in elevation in a cross section substantially normal to the floor;
Figure 7 shows a perspective view of the interior of the machining cabin 2 provided with the additional head 270 for the cutting blade 271.

The drawings listed above show a preferred embodiment of a machine according to the invention for machining elongated, wooden semiproducts such as boards, planks, crossbeams and the like, which is denoted in its entirety by the reference numeral 1 and which comprises a machining unit 200 for machining the semiproducts P and provided with a machining cabin 2 and a machining assembly.

The semiproducts P to be machined are transported one at a time by a feed unit 100 which moves them along a longitudinal feed direction X parallel to the direction of extension of the semiproducts P.

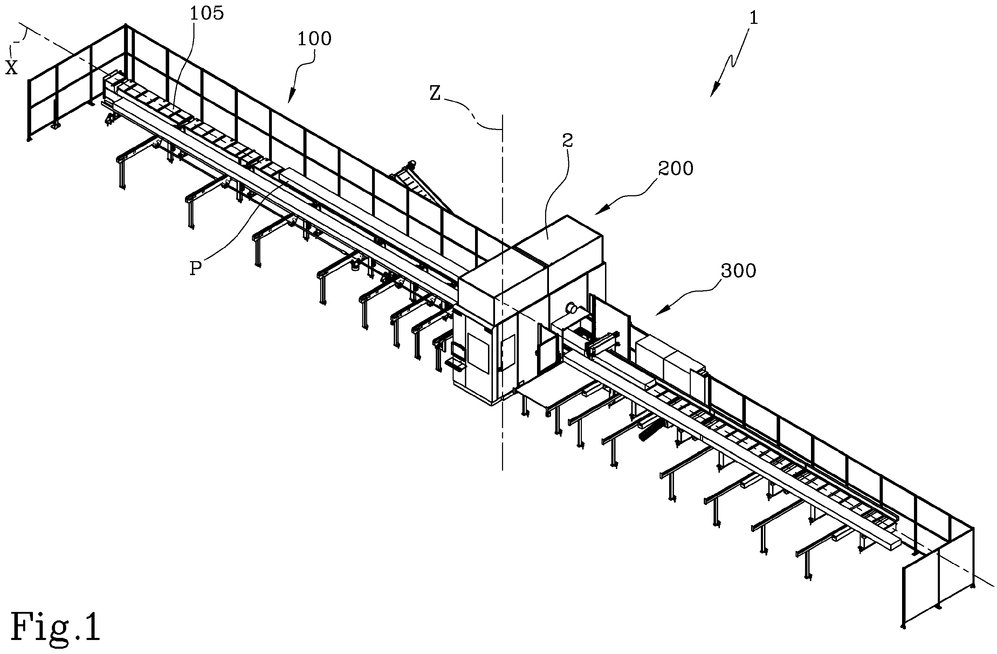

The loading unit 100 comprises conveyors, for example, a belt or roller conveyor 105 (Figure 1) which extend along the longitudinal direction X and which allow the semiproducts to be moved from a storage unit to the machining unit 200.

The machine 1 also comprises an outfeed unit 300 adapted to receive the finished semiproduct P from the machining unit 200.

The machining assembly comprises a plurality of axes Y, Z, D, B for roto-translating the tools 232 which machine the semiproducts P and which are mounted on a tool holder head 230 of the revolver type, hence configured to selectively set the machining tools according to its rotation about the axis of revolution D.

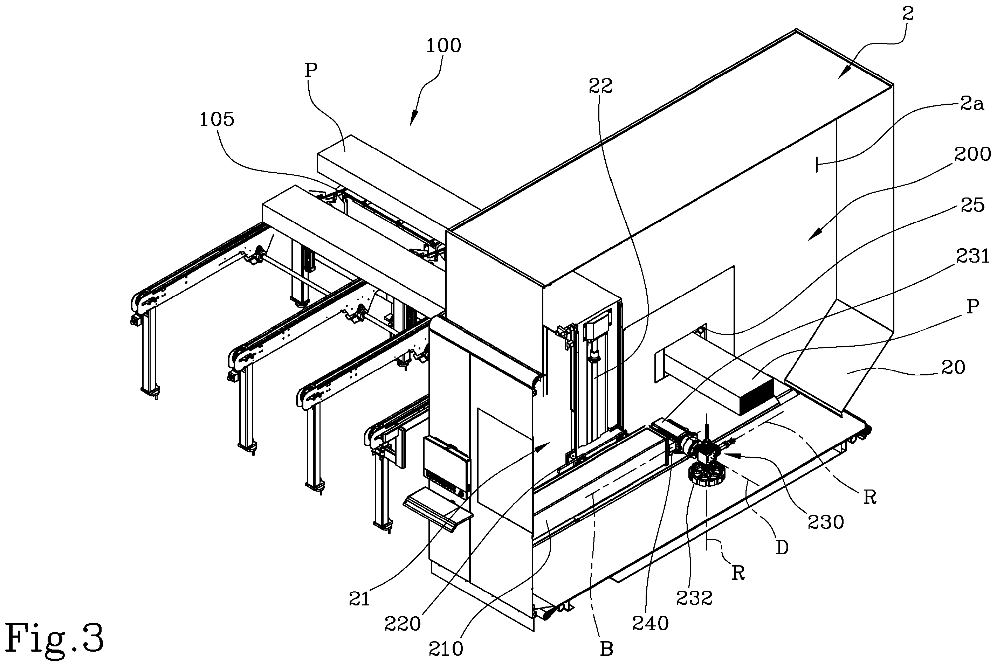

The head 230 is mounted on a transporting carrier 210 which allows it to move along a horizontal axis Y substantially parallel to the floor by means of a horizontal guide 21 defined along the axis Y and movable along a vertical axis Z substantially normal to the floor by means of a movement slider 220 which engages the mounting frame 20 of the cabin 2 by means of a vertical guide 22 extending along the axis Z (Figure 3).

All the tools 232 are driven by a single motor, which is different from an additional motor which, instead, drives the rotary selection of the revolver head 230.

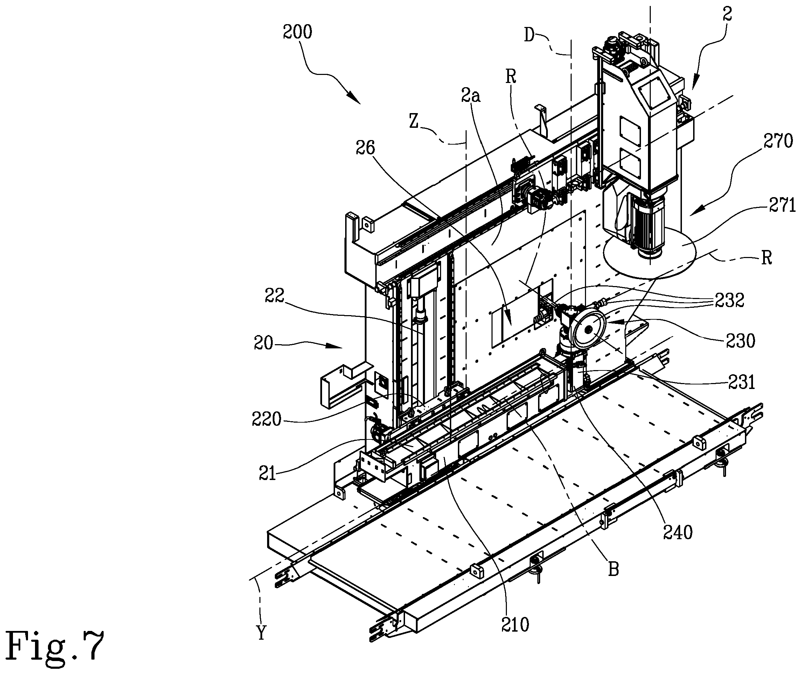

In the preferred embodiment, as shown in Figure 7, the tool holder assembly has an additional head 270 besides the tool holder head 230, which specifically supports a cutting blade 271 provided with actuators for rotation about three axes of the blade 271.

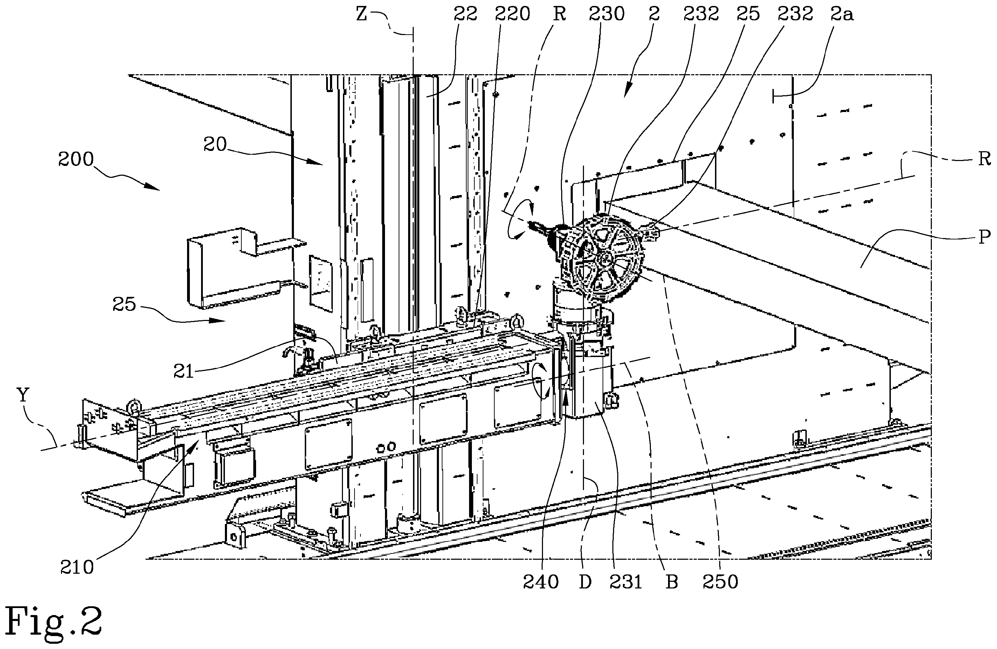

The carrier 210 and the slider 220 respectively constitute a horizontal arm and a vertical arm of a cross carriage 24 connected to the frame 20 (Figure 2).

The tool holder head 230 also moves around a pivoting axis B transverse to the longitudinal direction X and to the axis of revolution D by means of a pivoting head 240 mounted on the body of the carrier 210 and driven by an electric motor.

In the embodiment described here, the axis B is parallel to the floor and normal to the longitudinal direction X.

Thus, the tool 232 chosen for machining occupies one of a set of positions included between two end positions symmetrical to each other about the pivoting axis B and describing a circular arc portion subtended by an angle included between 0° and 105/110°, clockwise and anticlockwise relative to the vertical axis Z.

In practice, therefore, the tool 232 can rotate between -105° and +110° relative to the zero set by the vertical axis Z.

The pivoting head 240 acts directly on the supporting member 231 of the tool holder head 230, causing it to rotate steplessly about the pivoting axis B.

A retractile support 250 is provided for supporting a portion of the semiproduct P being machined and which is mounted on a first wall 2a of the machining cabin 2 at an inlet opening 25 for the semiproduct P. The support 250 faces the inside of the machining cabin 2 and, on one side, is connected to the roller conveyor 105 and, on the other side, has a free end 250a projecting towards the interior of the machining cabin 2 itself.

The retractile support 250 is movable between an initial position, which corresponds to the minimum size configuration, since the free end 250a is at its minimum distance from the wall 2a, and a working position, where the support 250 is at its maximum distance from the wall 2a and supports the semiproduct P so that it does not bend while it is being machined.

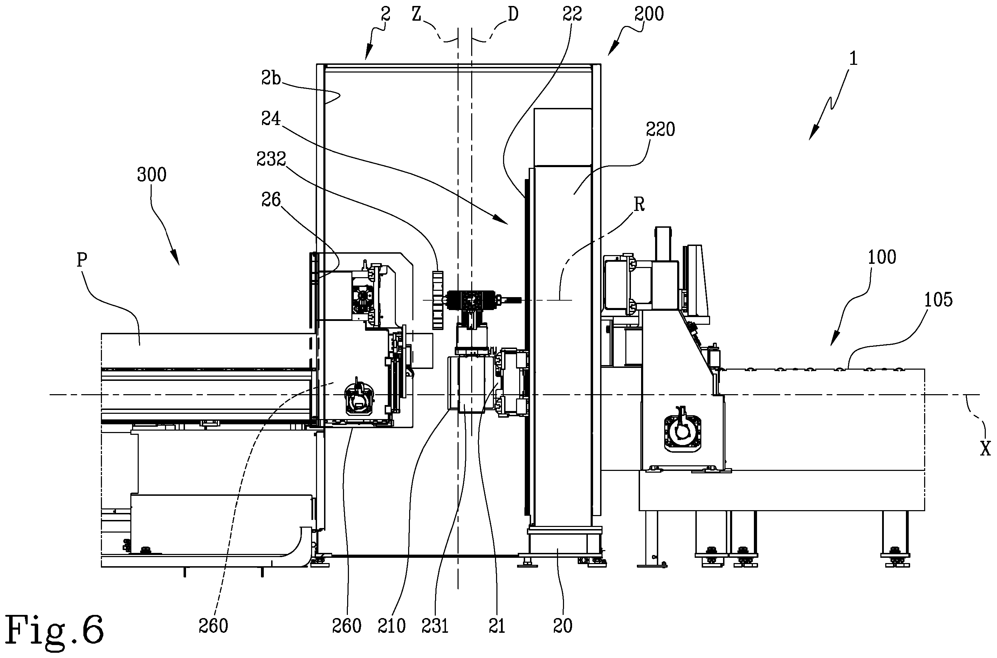

Also provided is a second, movable support 260, (indicated by the dashed line in Figure 6) on the wall 2b opposite the first wall 2a, at an access opening 26 towards the outfeed unit 300.

The machine 1 comprises a control unit configured to coordinate the rotation of the tool holder head 230 about the pivoting axis B with the movement of the semiproduct P along the longitudinal direction X, and vice versa.

Also, the control unit is configured to capture machine data regarding the machining to be carried out on the semiproduct P, so as to control the rotation of the tool holder head 230 about the pivoting axis B in coordination with the rotation of the tool about its working axis and with the position of the semiproduct P.

The operation of the supports 250 and 260 is controlled and managed by the control unit which coordinates their movements as a function of the motion actuators of the machining assembly.

In use, the semiproduct P to be machined is transported in succession along the longitudinal direction X from a loading unit 100 to a machining unit 200 via the roller conveyors 105.

When a portion of it enters the machining cabin 2, the control unit drives the machining assembly to roto-translate the tool holder head relative to the plurality of axes Y, Z, D, B so as to allow the selected tool 232 to machine the semiproduct P in a predetermined manner.

Thus, the unit selectively sets the tool 232 that will perform the machining by rotating the head 230 about the axis of revolution D.

The control unit also determines the movement of the retractile support 250 along the longitudinal direction X between the initial. minimum size position, and the working position, where it supports the semiproduct P being machined.

During machining, the control unit also controls the rotation of the tool holder head 230 about the pivoting axis B to allow machining on any one of the six faces of the semiproduct P.

The head 230 can rotate about the pivoting axis B through 360° but its rotation is carried out by rotating the pivoting head 240 alternatively clockwise or anticlockwise between two end positions which are symmetrical to each other at -105° and +110° relative to the zero on the vertical axis Z.

If provided, the control unit drives the second, movable support 260 in the same way as described for the retractile support 250.

When machining is over, the finished semiproduct P is conveyed towards an outfeed unit 300.

From the foregoing description, we can see how the invention achieves its proposed purpose and aims and, in particular, it is stressed that it can provide machines for machining wood which is simple in structure and suitable for multiple processes so as to constitute an effective commercial alternative to a wide range of more specific products.

In particular, the provision of a head of the revolver type which also rotates about a pivoting axis allows the user to reach all the faces of the semiproduct with any type of tool.

Another advantage of the invention is that such a machine for machining wood offers top performance at competitive costs.

Moreover, the retractile/movable support system allows limiting machine size, thus offering an additional commercial advantage.

## Claims

1. A machine (1) for machining elongated, wooden semiproducts (P) such as boards, planks, crossbeams and the like, comprising:
a machining unit (200) provided with a machining cabin (2) and a machining assembly (210, 220, 230, 240) having a plurality of axes (Y, Z, D, B) for the roto-translation of tools (232) for machining the semiproducts (P);
a feed unit (100) configured for moving each semiproduct (P) to be machined, along a longitudinal feed direction (X) towards the machining unit (200);
an outfeed unit (300) adapted to receive the finished semiproduct (P) from the machining unit (200);
the machining assembly (210, 220, 230, 240) being provided with a tool holder head (230) driven in rotation about an axis of revolution (D) and configured for selectively setting the tools (232) of said plurality as a function of its rotation about the axis of revolution (D);
the tool holder head (230) being mounted on a transporting carrier (210) which allows it to move along a horizontal axis (Y) parallel to the floor by means of a horizontal guide (21) defined along the horizontal axis (Y) and being movable along a vertical axis (Z) normal to the floor by means of a movement slider (220) which engages a mounting frame (20) of the cabin (2) by means of a vertical guide (22) extending along the vertical axis (Z);
the transporting carrier (210) and the movement slider (220) respectively constituting a horizontal arm and a vertical arm of a cross carriage (24) connected to the frame (20);
the tool holder head (230) being also pivotable about a pivoting axis (B) transverse to the longitudinal direction (X) and to the axis of revolution (D), and
the pivoting axis (B) being parallel to the floor and normal to the longitudinal feed direction (X).

2. The machine (1) according to claim 1, comprising a single drive motor for all the tools of said plurality and an additional drive motor for rotary selection around the axis of revolution (D) of the tool to be used for the holder head (230).

3. The machine (1) according to claim 2, comprising an additional head (270), provided with at least one actuator of its own, for the additional machining of the semiproduct (P).

4. The machine (1) according to claim 3, wherein the machining assembly (210, 220, 230, 240) comprises a transporting carrier (210) for transporting the tool holder head (230) along a horizontal axis (Y) substantially parallel to the floor and movable by means of a slider (220) along a vertical axis (Z) substantially normal to the floor.

5. The machine (1) according to claim 4, wherein the transporting carrier (210) supports a supporting member (231) of the tool holder head (230) pivotably about the pivoting axis (B);
preferably, the pivoting axis (B) being substantially parallel to the floor.

6. The machine (1) according to claim 5, wherein the supporting member (231) is arranged to be rotated steplessly about the pivoting axis (B) by means of a pivoting head (240) mounted on the transporting carrier (210) so that the tool chosen for machining occupies one of the set of positions included between two end positions, preferably symmetrical to each other about the pivoting axis (B), describing a portion of a circular arc subtended by a pivoting angle, clockwise and anticlockwise, about the vertical axis (Z).

7. The machine (1) according to one or more of claims 1-6, comprising a retractile support (250) for a portion of the semiproduct (P), facing the inside of the machining cabin (2), mounted on a first wall (2a) of the machining cabin (2) at an inlet opening (26) where the semiproduct (P) enters the cabin (2);
the retractile support (250) having a free end (250a) projecting towards the interior of the machining cabin (2) itself.

8. The machine (1) according to claim 7, wherein the retractile support (250) is movable between an initial position and a working position;
at the initial position, the free end (250a) of the retractile support (250) being at its minimum distance from the wall (2a) so it is in the minimum size configuration;
at the working position, the free end (250a) being at its maximum distance from the wall (2a) so as to support the largest possible part of the semiproduct (P) being machined.

9. The machine (1) according to claim 8, wherein the machining cabin (2) comprises a second, movable support (260) on the wall (2b) opposite the first wall (2a), at an access opening (27) towards the outfeed unit (300).

10. The machine (1) according to one or more of claims 1-9, comprising a control unit configured to coordinate the rotation of the tool holder head (230) about the pivoting axis (B) with the movement of the semiproduct (P) along the longitudinal direction (X), and vice versa.

11. The machine (1) according to claim 10, wherein the control unit is configured to capture machine data regarding the machining to be carried out on the semiproduct (P), so as to control the rotation of the tool holder head (230) about the pivoting axis (B) in coordination with the rotation of the tool about its working axis and with the position of the semiproduct (P).

12. A method for machining elongated, wooden semiproducts (P) such as boards, planks, crossbeams and the like, with a machine (1) as in any one of claims 1-11, comprising the following steps:
- transporting each semiproduct (P) to be machined in succession along a longitudinal feed direction (X) from a loading unit (100) to a machining unit (200). the machining unit (200) being provided with a machining cabin (2) and a machining assembly (210, 220, 230, 240);
- in the machining unit (200), driving the machining assembly (210, 220, 230, 240) having a plurality of axes (Y, Z, D, B) for the roto-translation of tools (232) for machining the semiproducts (P), via motion actuators;
- by rotating a tool holder head (230) about an axis of revolution (D), selecting the tool that is to machine the semiproduct (P);
- rotating the tool holder head (230) about a pivoting axis (B) transverse to the longitudinal direction (X) and the axis of revolution (D) to machine all the faces of the semiproduct (P) with the tool selected, the tool holder head (230) being mounted on a transporting carrier (210) which allows it to move along a horizontal axis (Y) parallel to the floor by means of a horizontal guide (21) defined along the horizontal axis (Y) and being movable along a vertical axis (Z) normal to the floor by means of a movement slider (220) which engages a mounting frame (20) of the cabin (2) by means of a vertical guide (22) extending along the vertical axis (Z), the transporting carrier (210) and the movement slider (220) respectively constituting a horizontal arm and a vertical arm of a cross carriage (24) connected to the frame (20), and the pivoting axis (B) being parallel to the floor and normal to the longitudinal feed direction (X);
- moving the finished semiproduct (P) towards an outfeed unit (300).

13. The method according to claim 12, wherein the rotation of the tool holder head (230) about the pivoting axis (B) occurs at any position included between two end positions, preferably symmetrical to each other about the pivoting axis (B), so as to describe, for each rotation, a portion of a circular arc subtended by a pivoting angle, clockwise and anticlockwise, about the vertical axis (Z).

14. The method according to claim 12 or 13, comprising the steps of feeding a portion of the semiproduct (P) into a machining cabin (2) containing the machining assembly (210, 220, 230, 240) and of moving a retractile support (250) along the longitudinal direction (X) for the portion of the semiproduct (P) entering from one wall (2a) of the cabin (2);
the step of moving being carried out between an initial position and a working position, wherein, at the initial position, the retractile support (250) has a minimum size configuration and, at the working position, the retractile support (250) has a configuration such as to support the largest possible part of the semiproduct (P) while the portion of the semiproduct (P) is being machined.

15. The method according to claim 14, wherein, during machining, a second movable support (260) for another portion of the semiproduct (P) leaving the machining unit (200) performs a retractile movement along the longitudinal orientation (X) between an initial position, where the second support has a minimum size configuration, and a working position, where its configuration is such as to support the largest possible part of the semiproduct (P) while the other portion of the semiproduct (P) is being machined.

16. The method according to one or more of claims 12-15, comprising the step of coordinating the rotation of the tool holder head (230) about the pivoting axis (B) with the rotation of the tool about its own axis and the position of the semiproduct (P) along the longitudinal direction (X), as a function of the machine data regarding the machining to be carried out on the semiproduct (P).

## Patentansprüche

1. Maschine (1) zur Bearbeitung länglicher Halbfertigerzeugnisse (P) aus Holz wie Bretter, Planken, Querbalken und dergleichen, umfassend:
eine Bearbeitungseinheit (200), die mit einer Bearbeitungskabine (2) und einer Bearbeitungsbaugruppe (210, 220, 230, 240) ausgestattet ist, welche eine Vielzahl von Achsen (Y, Z, D, B) zur Drehverschiebung von Werkzeugen (232) zur Bearbeitung der Halbfertigerzeugnisse (P) aufweist;
eine Zuführeinheit (100), die dazu ausgelegt ist, jedes zu bearbeitende Halbfertigerzeugnis (P) entlang einer Längszuführrichtung (X) hinführend zur Bearbeitungseinheit (200) zu bewegen;
eine Ausgabeeinheit (300), die dazu ausgelegt ist, das fertige Halbfertigerzeugnis (P) von der Bearbeitungseinheit (200) entgegenzunehmen;
wobei die Bearbeitungsbaugruppe (210, 220, 230, 240) mit einem Werkzeughalterkopf (230) ausgestattet ist, der um eine Drehachse (D) in Drehung versetzt wird und so ausgelegt ist, dass er die Werkzeuge (232) aus der Vielzahl in Abhängigkeit von seiner Drehung um die Drehachse (D) selektiv einstellt;
wobei der Werkzeughalterkopf (230) an einem Transportträger (210) angebracht ist, der es ihm ermöglicht, sich entlang einer horizontalen Achse (Y) parallel zum Boden mittels einer entlang der horizontalen Achse (Y) definierten horizontalen Führung (21) zu bewegen, und entlang einer vertikalen Achse (Z) senkrecht zum Boden mittels eines Bewegungsschiebers (220) bewegbar ist, der in einen Befestigungsrahmen (20) der Kabine (2) mittels einer vertikalen Führung (22) eingreift, die sich entlang der vertikalen Achse (Z) erstreckt;
wobei der Transportträger (210) und der Bewegungsschieber (220) jeweils einen horizontalen Arm und einen vertikalen Arm eines Querschlittens (24) bilden, der mit dem Rahmen (20) verbunden ist;
wobei der Werkzeughalterkopf (230) ferner um eine Schwenkachse (B) schwenkbar ist, die quer zur Längsrichtung (X) und zur Drehachse (D) verläuft, und
wobei die Schwenkachse (B) parallel zum Boden und senkrecht zur Längszuführrichtung (X) verläuft.

2. Maschine (1) nach Anspruch 1, umfassend einen einzigen Antriebsmotor für alle Werkzeuge aus der Vielzahl und einen zusätzlichen Antriebsmotor für die Drehauswahl um die Drehachse (D) des für den Halterkopf (230) zu verwendenden Werkzeugs.

3. Maschine (1) nach Anspruch 2, umfassend einen zusätzlichen Kopf (270), der mit mindestens einem eigenen Aktuator ausgestattet ist, zur zusätzlichen Bearbeitung des Halbfertigerzeugnisses (P).

4. Maschine (1) nach Anspruch 3, wobei die Bearbeitungsbaugruppe (210, 220, 230, 240) einen Transportträger (210) zum Transportieren des Werkzeughalterkopfes (230) entlang einer horizontalen Achse (Y) umfasst, die im Wesentlichen parallel zum Boden verläuft, und der mittels eines Schiebers (220) entlang einer vertikalen Achse (Z), die im Wesentlichen senkrecht zum Boden verläuft, bewegbar ist.

5. Maschine (1) nach Anspruch 4, wobei der Transportträger (210) ein Stützelement (231) des Werkzeughalterkopfes (230) schwenkbar um die Schwenkachse (B) stützt;
wobei die Schwenkachse (B) vorzugsweise im Wesentlichen parallel zum Boden verläuft.

6. Maschine (1) nach Anspruch 5, wobei das Stützelement (231) so angeordnet ist, dass es mittels eines Schwenkkopfes (240), das an dem Transportträger (210) angebracht ist, stufenlos um die Schwenkachse (B) gedreht werden kann, sodass das für die Bearbeitung ausgewählte Werkzeug eine Position aus dem Satz von Positionen einnimmt, die zwischen zwei Endpositionen eingeschlossen sind, die vorzugsweise symmetrisch zueinander um die Schwenkachse (B) liegen, wodurch ein Abschnitt eines Kreisbogens beschrieben wird, der durch einen Schwenkwinkel im Uhrzeigersinn und gegen den Uhrzeigersinn um die vertikale Achse (Z) aufgespannt wird.

7. Maschine (1) nach einem oder mehreren der Ansprüche 1-6, umfassend eine zurückziehbare Stütze (250) für einen zum Inneren der Bearbeitungskabine (2) hin ausgerichteten Abschnitt des Halbfertigerzeugnisses (P), die an einer ersten Wand (2a) der Bearbeitungskabine (2) an einer Einlassöffnung (26) angebracht ist, an der das Halbfertigerzeugnis (P) in die Kabine (2) eintritt; wobei die zurückziehbare Stütze (250) ein freies Ende (250a) aufweist, das in das Innere der Bearbeitungskabine (2) selbst hineinragt.

8. Maschine (1) nach Anspruch 7, wobei die zurückziehbare Stütze (250) zwischen einer Ausgangsposition und einer Arbeitsposition bewegbar ist;
wobei sich das freie Ende (250a) der zurückziehbaren Stütze (250) in der Ausgangsposition in seinem geringsten Abstand zur Wand (2a) befindet, sodass es sich in der Konfiguration mit minimaler Größe befindet; wobei sich das freie Ende (250a) in der Arbeitsposition in seinem größten Abstand zur Wand (2a) befindet, um den größtmöglichen Teil des zu bearbeitenden Halbfertigerzeugnisses (P) zu stützen.

9. Maschine (1) nach Anspruch 8, wobei die Bearbeitungskabine (2) eine zweite, bewegbare Stütze (260) an der der ersten Wand (2a) gegenüberliegenden Wand (2b) an einer Zugangsöffnung (27) hinführend zur Ausgabeeinheit (300) umfasst.

10. Maschine (1) nach einem oder mehreren der Ansprüche 1-9, umfassend eine Steuereinheit, die so ausgelegt ist, dass sie die Drehung des Werkzeughalterkopfes (230) um die Schwenkachse (B) mit der Bewegung des Halbfertigerzeugnisses (P) entlang der Längsrichtung (X) koordiniert und umgekehrt.

11. Maschine (1) nach Anspruch 10, wobei die Steuereinheit so ausgelegt ist, dass sie Maschinendaten bezüglich der am Halbfertigerzeugnis (P) durchzuführenden Bearbeitung erfasst, um die Drehung des Werkzeughalterkopfes (230) um die Schwenkachse (B) in Koordination mit der Drehung des Werkzeugs um dessen Arbeitsachse und mit der Position des Halbfertigerzeugnisses (P) zu steuern.

12. Verfahren zur Bearbeitung länglicher Halbfertigerzeugnisse (P) aus Holz wie Bretter, Planken, Querbalken und dergleichen, mit einer Maschine (1) nach einem der Ansprüche 1-11, umfassend die folgenden Schritte:
- Transportieren jedes zu bearbeitenden Halbfertigerzeugnisses (P) nacheinander entlang einer Längszuführrichtung (X) von einer Ladeeinheit (100) zu einer Bearbeitungseinheit (200), wobei die Bearbeitungseinheit (200) mit einer Bearbeitungskabine (2) und einer Bearbeitungsbaugruppe (210, 220, 230, 240) ausgestattet ist;
- in der Bearbeitungseinheit (200), Antreiben der Bearbeitungsbaugruppe (210, 220, 230, 240), die eine Vielzahl von Achsen (Y, Z, D, B) zur Drehverschiebung von Werkzeugen (232) mittels Bewegungsaktuatoren zur Bearbeitung der Halbfertigerzeugnisse (P) aufweist;
- durch Drehen eines Werkzeughalterkopfes (230) um eine Drehachse (D), Auswählen des Werkzeugs, das das Halbfertigerzeugnis (P) bearbeiten soll;
- Drehen des Werkzeughalterkopfes (230) um eine Schwenkachse (B) quer zur Längsrichtung (X) und zur Drehachse (D), um alle Flächen des Halbfertigerzeugnisses (P) mit dem ausgewählten Werkzeug zu bearbeiten, wobei der Werkzeughalterkopf (230) auf einem Transportträger (210) montiert ist, der es ihm ermöglicht, sich entlang einer horizontalen Achse (Y) parallel zum Boden mittels einer entlang der horizontalen Achse (Y) definierten horizontalen Führung (21) zu bewegen, und entlang einer vertikalen Achse (Z) senkrecht zum Boden mittels eines Bewegungsschiebers (220) bewegbar ist, der in einen Befestigungsrahmen (20) der Kabine (2) mittels einer vertikalen Führung (22) eingreift, die sich entlang der vertikalen Achse (Z) erstreckt, wobei der Transportträger (210) und der Bewegungsschieber (220) jeweils einen horizontalen Arm und einen vertikalen Arm eines Querschlittens (24) bilden, der mit dem Rahmen (20) verbunden ist, und die Schwenkachse (B) parallel zum Boden und senkrecht zur Längszuführrichtung (X) verläuft;
- Bewegen des fertigen Halbfertigerzeugnisses (P) hinführend zu einer Ausgabeeinheit (300).

13. Verfahren nach Anspruch 12, wobei die Drehung des Werkzeughalterkopfes (230) um die Schwenkachse (B) an jeder beliebigen Position zwischen zwei Endpositionen erfolgt, die vorzugsweise symmetrisch zueinander um die Schwenkachse (B) liegen, sodass bei jeder Drehung ein Abschnitt eines Kreisbogens beschrieben wird, der durch einen Schwenkwinkel im Uhrzeigersinn und gegen den Uhrzeigersinn um die vertikale Achse (Z) aufgespannt wird.

14. Verfahren nach Anspruch 12 oder 13, umfassend die Schritte zum Zuführen eines Abschnitts des Halbfertigerzeugnisses (P) in eine Bearbeitungskabine (2), die die Bearbeitungsbaugruppe (210, 220, 230, 240) enthält, und zum Bewegen einer zurückziehbaren Stütze (250) entlang der Längsrichtung (X) für den von einer Wand (2a) der Kabine (2) eintretenden Abschnitt des Halbfertigerzeugnisses (P);
wobei der Schritt zum Bewegen zwischen einer Ausgangsposition und einer Arbeitsposition ausgeführt wird, wobei in der Ausgangsposition die zurückziehbare Stütze (250) eine Konfiguration mit minimaler Größe aufweist und in der Arbeitsposition die zurückziehbare Stütze (250) eine Konfiguration aufweist, die es ermöglicht, den größtmöglichen Teil des Halbfertigerzeugnisses (P) zu stützen, während der Abschnitt des Halbfertigerzeugnisses (P) bearbeitet wird.

15. Verfahren nach Anspruch 14, wobei eine zweite bewegbare Stütze (260) für einen weiteren Abschnitt des Halbfertigerzeugnisses (P), das die Bearbeitungseinheit (200) verlässt, während der Bearbeitung eine Rückzugsbewegung entlang der Längsausrichtung (X) zwischen einer Ausgangsposition, in der die zweite Stütze eine Konfiguration mit minimaler Größe aufweist, und einer Arbeitsposition ausführt, die so ausgelegt ist, dass sie den größtmöglichen Teil des Halbfertigerzeugnisses (P) stützt, während der andere Abschnitt des Halbfertigerzeugnisses (P) bearbeitet wird.

16. Verfahren nach einem oder mehreren der Ansprüche 12-15, umfassend den Schritt zum Koordinieren der Drehung des Werkzeughalterkopfes (230) um die Schwenkachse (B) mit der Drehung des Werkzeugs um seine eigene Achse und der Position des Halbfertigerzeugnisses (P) entlang der Längsrichtung (X) in Abhängigkeit von den Maschinendaten bezüglich der am Halbfertigerzeugnis (P) durchzuführenden Bearbeitung.

## Revendications

1. Machine (1) d'usinage de semi-produits en bois allongés (P) tels que des panneaux, des planches, des traverses et similaires, comprenant :
une unité d'usinage (200) pourvue d'une cabine d'usinage (2) et d'un ensemble d'usinage (210, 220, 230, 240) ayant une pluralité d'axes (Y, Z, D, B) pour la roto-translation d'outils (232) pour usiner les semi-produits (P) ;
une unité d'alimentation (100) configurée pour déplacer chaque semi-produit (P) à usiner, le long d'une direction d'alimentation longitudinale (X) vers l'unité d'usinage (200) ;
une unité de sortie (300) adaptée pour recevoir le semi-produit fini (P) de l'unité d'usinage (200) ;
l'ensemble d'usinage (210, 220, 230, 240) étant pourvu d'une tête porte-outil (230) entraînée en rotation autour d'un axe de révolution (D) et configurée pour régler de manière sélective les outils (232) de ladite pluralité en fonction de sa rotation autour de l'axe de révolution (D) ;
la tête porte-outil (230) étant montée sur un chariot transporteur (210) qui lui permet de se déplacer le long d'un axe horizontal (Y) parallèle au sol au moyen d'un guide horizontal (21) défini le long de l'axe horizontal (Y) et étant mobile le long d'un axe vertical (Z) perpendiculaire au sol au moyen d'un curseur de déplacement (220) qui s'engage sur un châssis de montage (20) de la cabine (2) au moyen d'un guide vertical (22) s'étendant le long de l'axe vertical (Z) ;
le chariot transporteur (210) et le curseur de déplacement (220) constituant respectivement un bras horizontal et un bras vertical d'un chariot transversal (24) relié au châssis (20) ;
la tête porte-outil (230) pouvant également pivoter autour d'un axe de pivotement (B) transversal à la direction longitudinale (X) et à l'axe de révolution (D), et
l'axe de pivotement (B) étant parallèle au sol et perpendiculaire à la direction d'alimentation longitudinale (X).

2. Machine (1) selon la revendication 1, comprenant un moteur d'entraînement unique pour tous les outils de ladite pluralité et un moteur d'entraînement supplémentaire pour la sélection rotative autour de l'axe de révolution (D) de l'outil à utiliser pour la tête portante (230).

3. Machine (1) selon la revendication 2, comprenant une tête supplémentaire (270), pourvue d'au moins un actionneur propre, pour l'usinage supplémentaire du semi-produit (P).

4. Machine (1) selon la revendication 3, dans laquelle l'ensemble d'usinage (210, 220, 230, 240) comprend un chariot transporteur (210) pour transporter la tête porte-outil (230) le long d'un axe horizontal (Y) substantiellement parallèle au sol et mobile au moyen d'un curseur (220) le long d'un axe vertical (Z) substantiellement perpendiculaire au sol.

5. Machine (1) selon la revendication 4, dans laquelle le chariot transporteur (210) supporte un élément de support (231) de la tête porte-outil (230) de manière pivotante autour de l'axe de pivotement (B) ;
de préférence, l'axe de pivotement (B) étant substantiellement parallèle au sol.

6. Machine (1) selon la revendication 5, dans laquelle l'élément de support (231) est agencé pour être mis en rotation en continu autour de l'axe de pivotement (B) au moyen d'une tête pivotante (240) montée sur le chariot transporteur (210) de sorte que l'outil choisi pour l'usinage occupe l'une des positions de l'ensemble de positions incluse entre deux positions d'extrémité, de préférence symétriques l'une par rapport à l'autre autour de l'axe de pivotement (B), décrivant une portion d'un arc de cercle sous-tendu par un angle de pivotement, en sens horaire et en sens inverse horaire, autour de l'axe vertical (Z).

7. Machine (1) selon une ou plusieurs des revendications 1-6, comprenant un support rétractable (250) pour une portion du semi-produit (P), faisant face à l'intérieur de la cabine d'usinage (2), monté sur une première paroi (2a) de la cabine d'usinage (2) au niveau d'une ouverture d'entrée (26) où le semi-produit (P) pénètre dans la cabine (2) ;
le support rétractable (250) ayant une extrémité libre (250a) faisant saillie vers l'intérieur de la cabine d'usinage (2) elle-même.

8. Machine (1) selon la revendication 7, dans laquelle le support rétractable (250) est mobile entre une position initiale et une position de travail ;
dans la position initiale, l'extrémité libre (250a) du support rétractable (250) étant à sa distance minimale de la paroi (2a) de sorte qu'elle est dans la configuration de taille minimale ;
dans la position de travail, l'extrémité libre (250a) étant à sa distance maximale de la paroi (2a) de manière à supporter la plus grande partie possible du semi-produit (P) en cours d'usinage.

9. Machine (1) selon la revendication 8, dans laquelle la cabine d'usinage (2) comprend un second support mobile (260) sur la paroi (2b) opposée à la première paroi (2a), au niveau d'une ouverture d'accès (27) vers l'unité de sortie (300).

10. Machine (1) selon une ou plusieurs des revendications 1-9, comprenant une unité de commande configurée pour coordonner la rotation de la tête porte-outil (230) autour de l'axe de pivotement (B) avec le mouvement du semi-produit (P) le long de la direction longitudinale (X), et vice versa.

11. Machine (1) selon la revendication 10, dans laquelle l'unité de commande est configurée pour capturer des données de machine concernant l'usinage à effectuer sur le semi-produit (P), de manière à commander la rotation de la tête porte-outil (230) autour de l'axe de pivotement (B) en coordination avec la rotation de l'outil autour de son axe de travail et avec la position du semi-produit (P).

12. Procédé d'usinage de semi-produits en bois allongés (P) tels que des panneaux, des planches, des traverses et similaires, avec une machine (1) selon l'une quelconque des revendications 1-11, comprenant les étapes suivantes :
- transporter chaque semi-produit (P) à usiner successivement le long d'une direction d'alimentation longitudinale (X) d'une unité de chargement (100) à une unité d'usinage (200), l'unité d'usinage (200) étant pourvue d'une cabine d'usinage (2) et d'un ensemble d'usinage (210, 220, 230, 240) ;
- dans l'unité d'usinage (200), entraîner l'ensemble d'usinage (210, 220, 230, 240) ayant une pluralité d'axes (Y, Z, D, B) pour la roto-translation d'outils (232) pour usiner les semi-produits (P), via des actionneurs de mouvement ;
- en faisant tourner une tête porte-outil (230) autour d'un axe de révolution (D), sélectionner l'outil qui doit usiner le semi-produit (P) ;
- faire tourner la tête porte-outil (230) autour d'un axe de pivotement (B) transversal à la direction longitudinale (X) et à l'axe de révolution (D) pour usiner toutes les faces du semi-produit (P) avec l'outil sélectionné, la tête porte-outil (230) étant montée sur un chariot transporteur (210) qui lui permet de se déplacer le long d'un axe horizontal (Y) parallèle au sol au moyen d'un guide horizontal (21) défini le long de l'axe horizontal (Y) et étant mobile le long d'un axe vertical (Z) perpendiculaire au sol au moyen d'un curseur de déplacement (220) qui s'engage sur un châssis de montage (20) de la cabine (2) au moyen d'un guide vertical (22) s'étendant le long de l'axe vertical (Z), le chariot transporteur (210) et le curseur de déplacement (220) constituant respectivement un bras horizontal et un bras vertical d'un chariot transversal (24) relié au châssis (20), et l'axe de pivotement (B) étant parallèle au sol et perpendiculaire à la direction longitudinale d'alimentation (X) ;
- déplacer le semi-produit fini (P) vers une unité de sortie (300).

13. Procédé selon la revendication 12, dans lequel la rotation de la tête porte-outil (230) autour de l'axe de pivotement (B) se produit dans toute position incluse entre deux positions d'extrémité, de préférence symétriques l'une par rapport à l'autre autour de l'axe de pivotement (B), de manière à décrire, pour chaque rotation, une portion d'un arc de cercle sous-tendu par un angle de pivotement, en sens horaire et en sens inverse horaire, autour de l'axe vertical (Z).

14. Procédé selon la revendication 12 ou 13, comprenant les étapes d'alimenter une portion du semi-produit (P) dans une cabine d'usinage (2) contenant l'ensemble d'usinage (210, 220, 230, 240) et de déplacer un support rétractable (250) le long de la direction longitudinale (X) pour la portion du semi-produit (P) entrant par une paroi (2a) de la cabine (2) ;
l'étape de déplacer étant effectuée entre une position initiale et une position de travail, dans lequel, dans la position initiale, le support rétractable (250) a une configuration de taille minimale et, dans la position de travail, le support rétractable (250) a une configuration telle qu'il supporte la plus grande partie possible du semi-produit (P) pendant que la portion du semi-produit (P) est en cours d'usinage.

15. Procédé selon la revendication 14, dans lequel, pendant l'usinage, un second support mobile (260) pour une autre portion du semi-produit (P) quittant l'unité d'usinage (200) effectue un mouvement rétractable le long de l'orientation longitudinale (X) entre une position initiale, où le second support a une configuration de taille minimale, et une position de travail, où sa configuration est telle qu'il supporte la plus grande partie possible du semi-produit (P) pendant que l'autre portion du semi-produit (P) est en cours d'usinage.

16. Procédé selon une ou plusieurs des revendications 12-15, comprenant l'étape de coordonner la rotation de la tête porte-outil (230) autour de l'axe de pivotement (B) avec la rotation de l'outil autour de son propre axe et la position du semi-produit (P) le long de la direction longitudinale (X), en fonction des données de machine concernant l'usinage à effectuer sur le semi-produit (P).
